# EUROPEAN PATENT APPLICATION

(11) **EP 2 645 232 A1**
(43) Date of publication of application: **02.10.2013**
(21) Application number: 12167145.7
(22) Date of filing: 08.05.2012
(51) Int. Cl.: G06F 3/14, G06Q 30/02

(54) **Multi-display POS system using portable computer**

(30) Priority: 30.03.2012 KR 20120033385
(71) Applicant: Bixolon Co., Ltd., Gyeonggi-do (KR)
(72) Inventor: Kwak, Young-Hwan, Hwaseong Si (KR)
(74) Representative: von Kreisler Selting Werner

(57) **Abstract**

A point-of-sale (POS) system is based on a portable computer. The POS system includes a main processor to which a host central processing unit (CPU) and a software graphics application program interface (API) are mounted; a memory interface to which a memory chipset and a bus-to-device component are mounted; a graphics system to which a graphics accelerator, a Rambus arbiter peripheral component interconnect (PCI), a direct memory access (MA), a random access memory digital-to-analog converter (RAMDAC), a queue and a block write are mounted; an internal monitor as a first monitor; a wireless module, which wirelessly transmits graphics data; and an external monitor, which displays graphics data that is received wirelessly or via wires from a portable computer. The portable computer supports the external monitor with a copy mode, an expansion mode, and an extension mode.

## Description

### CROSS REFERENCE TO RELATED APPLICATION

The present application claims priority from Korean Patent Application Number 10-2012-0033385 filed on March 30, 2012, the entire contents of which application are incorporated herein for all purposes by this reference.

### BACKGROUND OF THE INVENTION

### Field of the Invention

The present invention relates to a point-of-sale (POS) system using a portable computer, and more particularly, to a POS system using a portable computer, in which an extension screen-controlling technology for multiple monitors (including all types of screen display devices, such as a cathode ray tube (CRT), a projector, a plasma display panel (PDP), a liquid crystal display (LCD), and a light-emitting diode (LED) display), which is not realized in a portable computer (i.e. a computer that is easy to carry, such as a tablet PC, a smart-phone, or a slate PC), is introduced in order to support a copy mode, in which an image that is being displayed on the screen of a portable computer is displayed on the screen of another portable computer, an expansion mode, in which the screen of a portable computer is expanded or shrunk, and an extension mode, in which an additional screen or a separate application program screen is displayed by increasing the area of the screen of a portable computer.

### Description of Related Art

In general, a point-of-sale (POS) system refers to a system in which the function of a cash register and the function of a computer terminal are combined. The POS system not only calculates the amount of sales but also collects and processes various information and data, which are necessary for retail management. The POS system is also referred to as a point-of-sale management system.

The POS system includes a POS terminal, a store controller, a host computer, and the like. A barcode scanner, a device that automatically reads barcodes, is attached to the POS system.

When a product having barcodes printed on or attached to a packing paper thereof is passed through the scanner, a variety of information about the product is automatically sent to a main computer. The use of the POS system enables an operator to determine the flow of sale of products of his/her company, learn details, such as the trend and time of sales of new products and sales hooks, the trend of sales of items, the sale of which has declined, imitations and competitive products. Such details help effectively determine the correlation between the price and the amount of sales and major sales targets, and help establish effective marketing plans, such as advertising plans. In addition, stocks, ordering, and shipping management systems, which have required manual works from human labor, can be simplified and standardized, thereby reducing costs.

A patent related to the POS system will be described as follows.

According to a patent document, which was filed on October 5, 1999, there is disclosed a method of managing a store using a POS system, in which a plurality of cash registers are connected to each other, and a microcomputer is additionally connected as a host to the POS system. The method includes the following steps of: receiving and storing a notice to be informed to clerks in a corresponding memory region; determining whether or not data to be transmitted to the cash registers is present; accessing the cash registers so as to communicate when the data to be transmitted to the cash registers is present; determining whether or not accessing the cash registers so as to communicate is successful; if accessing the cash registers is not successful as a result of the determination, attempting to re-access a corresponding cash register, and if accessing the cash registers is successful, sending the notice, which is stored in the memory, to the cash registers; determining whether or not the notice is successfully transmitted to the cash registers; and if the notice is not successfully transmitted as a result of the determination, re-accessing the notice to a corresponding cash register.

However, the POS system of the related art is very expensive to purchase, install and maintain, because it is established on the basis of a desktop computer. There are also drawbacks in that it is difficult to apply the POS system in regions or countries in which networks other than mobile communication networks have not been properly constructed. In particular, since the POS system of the related art uses a wired communication network, it is difficult to use the POS system while moving.

The information disclosed in this Background of the Invention section is only for the enhancement of understanding of the background of the invention, and should not be taken as an acknowledgment or any form of suggestion that this information forms a prior art that would already be known to a person skilled in the art.

### BRIEF SUMMARY OF THE INVENTION

Various aspects of the present invention provide a point-of-sale (POS) system that is based on a portable computer.

Also provided is a POS system that is based on a portable computer, such that a user can use it while moving.

Also provided is a POS system that is based on a portable computer, in which at least two screen display devices provide a copy mode, an expansion mode and an extension mode.

In an aspect of the present invention, provided is a POS system that includes a main processor to which a host central processing unit (CPU) and a software graphics application program interface (API) are mounted; a memory interface to which a memory chipset and a bus-to-device component are mounted; a graphics system to which a graphics accelerator, a Rambus arbiter peripheral component interconnect (PCI), a direct memory access (MA), a random access memory digital-to-analog converter (RAMDAC), a queue and a block write are mounted; an internal monitor as a first monitor; a wireless module, which wirelessly transmits graphics data; and an external monitor, which displays graphics data that is received wirelessly or via wires from a portable computer. The portable computer supports the external monitor with a copy mode, an expansion mode, and an extension mode.

In an exemplary embodiment of the invention, the portable computer allows an application program to be installed therein, so that an operator sets values of a resolution, colors and a refresh rate in the added monitor, the set values being changeable via the application program at any time.

In an exemplary embodiment of the invention, data that is simultaneously displayed on the internal monitor and the external monitor is set to be output at the same time.

In an exemplary embodiment of the invention, an advertising time is set such that an advertisement is exposed at a time when payment information is not exposed, or the advertisement is exposed on a partial region of a screen while the payment information is displayed on a remaining region of the screen.

According to embodiments of the invention, it is possible to set the image output function of the portable computer, which was limited to a copy mode, so as to support both an expansion mode and an extension mode, so that the portable computer can replace a variety of image devices, which are used in the industry. It is possible to easily realize an intended system that is cheaper than a desktop computer. In addition, it is possible to advantageously maximize a mobile communication function that is an advantage of the portable computer.

The methods and apparatuses of the present invention have other features and advantages which will be apparent from, or are set forth in greater detail in the accompanying drawings, which are incorporated herein, and in the following Detailed Description of the Invention, which together serve to explain certain principles of the present invention.

### BRIEF DESCRIPTION OF THE DRAWINGS

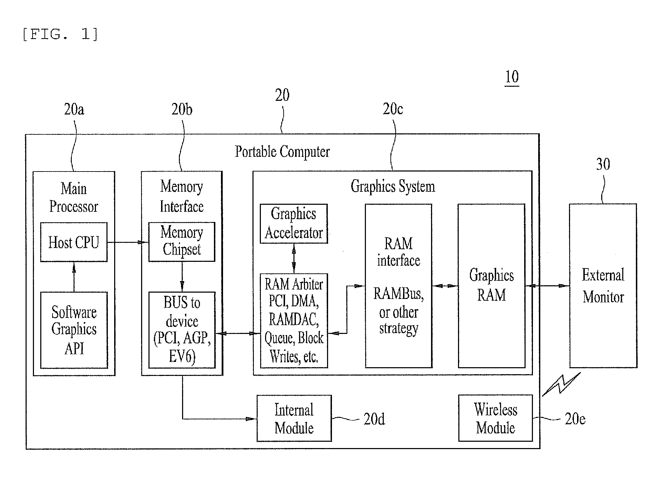

FIG. 1 is a block diagram depicting a point-of-sale (POS) system using a portable computer according to an exemplary embodiment of the invention.

### DETAILED DESCRIPTION OF THE INVENTION

Reference will now be made in detail to various embodiments of the present invention, examples of which are illustrated in the accompanying drawings and described below. While the invention will be described in conjunction with exemplary embodiments thereof, it is to be understood that the present description is not intended to limit the invention to those exemplary embodiments. On the contrary, the invention is intended to cover not only the exemplary embodiments, but also various alternatives, modifications, equivalents and other embodiments that may be included within the spirit and scope of the invention as defined by the appended claims.

Referring to FIG. 1, a point-of-sale (POS) system 10 according to an exemplary embodiment of the invention is a POS system based on a portable computer 20.

The POS system 10 includes a main processor 20a, to which a host central processor unit (CPU) and a software graphics application program interface (API) are mounted; a memory interface 20b, to which a memory chipset and a bus-to-device component are mounted; a graphics system 20c, to which a graphics accelerator, a Rambus Arbiter peripheral component interconnect (PCI), a direct memory access (DMA), a random access memory digital-to-analog converter (RAMDAC), a queue, a block write, and the like are mounted; an internal monitor 20d as a first monitor; a wireless module 20e, which wirelessly transmits graphics data; and an external monitor 30, which displays the graphics data that is received wirelessly or via wires from the portable computer 20.

A description will be given below of the operation and effects of the POS system.

In the POS system, the main processor 20a manages overall control over the system of the portable system 20, the memory interface 20b serves as an auxiliary function to store or read an operation that is run by the main memory 20a, and the graphics system 20c outputs and controls the screen of the external monitor 30. The wireless module 20e processes data with the internal monitor 20d, which serves to display a screen for the portable computer 20, and the external monitor 30 in a wireless mode instead of via wires. The external monitor 30 displays image data that is output to the outside of the portable computer 20.

The main processor 20a manages the overall control over the system. In detail, the main processor 20a is implemented as a software graphics application program interface (API), that is, an interface that can control various functions that are provided by an operating system or programming languages so that it can be used by the host CPU or the application program, which receives information from the outside, stores the information, analyzes and calculates commands in a computer program, and output commands to the outside. The main processor 20a is connected to the memory interface 20b.

The memory interface 20b includes the memory chipset, which stores therein data that is processed by the main processor 20a, and the bus-to-device component (PCI, AGP, EV6, etc.), which is implemented as a bus interface connected to surrounding interfaces. The memory interface 20b is connected to the internal monitor 20d and the graphics system 20c.

The graphics system 20c generates graphics data that is to be projected to an actual screen from data that has been processed by the memory interface 20b, transfers the graphics data to an internal graphics RAM, and outputs the graphics data to the external monitor 30 via wired/wireless communication.

The POS system according to an exemplary embodiment of the invention provides graphics data depending on a copy mode, an expansion mode and an extension mode from the portable computer to the internal monitor and the external monitor.

### 1) Copy Mode

In the early days, a multiple output interface was devised in order to display the same image on all of output interfaces in a personal computer (PC) (also referred to as mirroring or cloning). Such graphics cards were mainly used for a presentation. In the presentation, audience can watch a projected image, and a speaker can watch a copied image.

### 2) Expansion Mode

Some graphics cards provide the function of expanding an existing desktop region to two motors without forming an additional desktop space. This can provide a resolution of 2048x768 using monitors having a pixel resolution of 2048x768. For this, respective monitors must have the same resolution and the same number of colors.

### 3) Extension Mode

A desktop area that is added in the extension mode is formed on an "added monitor," that is, an external monitor. The added monitor can use differently set values (a resolution, colors, a refresh rate, etc.). This function is devised in order to construct the POS system of the present invention using a portable computer.

As described above, the present invention imparts the portable computer with the function of the main processor or controls the multiple monitors using a separate graphics processor unit (GPU) in order to use the multiple monitors.

The extension function that the present invention provides includes the functions of: 1) setting a resolution, colors, and a refresh rate in an added monitor, 2) synchronizing data, and 3) setting an advertising time, which will be described in more detail as follows.

### 1) Setting Added Monitor

An application program can be installed in the portable computer, so that an operator can set a resolution, colors and a refresh rate in the added monitor. The set values can be changed via the application program at any time.

### 2) Data Synchronization

Data that is simultaneously displayed on the internal monitor and the external monitor is set to be output at the same time, so that the POS system can be easily operated.

### 3) Setting Advertising Time and Space

Due to the characteristics of the POS system, the advertising time of the external monitor is set such that an advertisement is exposed at a time when payment information is not displayed. For example, if an advertising dynamic image is exposed at the time when payment information about a selected product is displayed, the operation of the POS system may be in trouble or obstructed. In contrast, it is possible to expose the advertisement on a specific region of the screen while displaying the payment information on the other region, since this does not obstruct the operation of the POS system.

The foregoing descriptions of specific exemplary embodiments of the present invention have been presented for the purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents.

## Claims

1. A point-of-sale system comprising:
a main processor to which a host central processing unit and a software graphics application program interface are mounted;
a memory interface to which a memory chipset and a bus-to-device component are mounted;
a graphics system to which a graphics accelerator, a Rambus arbiter peripheral component interconnect, a direct memory access, a random access memory digital-to-analog converter, a queue and a block write are mounted;
an internal monitor as a first monitor;
a wireless module, which wirelessly transmits graphics data; and
an external monitor, which displays graphics data that is received wirelessly or via wires from a portable computer,
wherein the portable computer supports the external monitor with a copy mode, an expansion mode, and an extension mode.

2. The point-of-sale system of claim 1, wherein the portable computer allows an application program to be installed therein, so that an operator sets values of a resolution, colors and a refresh rate in the added monitor, the set values being changeable via the application program at any time.

3. The point-of-sale system of claim 1, wherein data that is simultaneously displayed on the internal monitor and the external monitor is set to be output at a same time.

4. The point-of-sale system of claim 1, wherein an advertising time is set such that an advertisement is exposed at a time when payment information is not exposed, or the advertisement is exposed on a partial region of a screen while the payment information is displayed on a remaining region of the screen.
